(19) **Europäisches Patentamt European Patent Office Office européen des brevets**

(11) **EP 4 239 289 B1**

(12) **FASCICULE DE BREVET EUROPEEN**

(45) Date de publication et mention
de la délivrance du brevet:
**24.06.2026 Bulletin 2026/26**

(21) Numéro de dépôt: **23153214.4**

(22) Date de dépôt: **25.01.2023**

(51) Classification Internationale des Brevets (IPC):
**G01C 21/00** (2006.01)     **G01C 21/10** (2006.01)
**G01C 21/26** (2006.01)     **G08G 1/01** (2006.01)
**G01C 21/34** (2006.01)

(52) Classification Coopérative des Brevets (CPC):
**G01C 21/005; G01C 21/10; G01C 21/3407;
G08G 1/0112; G08G 1/0129; G08G 1/0133;
G08G 1/0145; G08G 1/096816; G08G 1/096844;
G08G 1/096866**

(54) **PROCÉDÉ DE DÉTERMINATION D' AU MOINS UNE ROUTE ENTRE UNE ZONE GÉOGRAPHIQUE D' ORIGINE ET UNE ZONE GÉOGRAPHIQUE DE DESTINATION**

VERFAHREN ZUR BESTIMMUNG MINDESTENS EINER ROUTE ZWISCHEN EINEM GEOGRAPHISCHEN GEBIET DER HERKUNFT UND EINEM GEOGRAFISCHEN ZIELBEREICH

METHOD FOR DETERMINING AT LEAST ONE ROUTE BETWEEN AN ORIGINAL GEOGRAPHICAL AREA AND A TARGET GEOGRAPHICAL AREA

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.02.2022 FR 2201121**

(43) Date de publication de la demande:
**06.09.2023 Bulletin 2023/36**

(73) Titulaire: **IFP Energies nouvelles
92500 Rueil-Malmaison (FR)**

(72) Inventeurs:
• **GONZALEZ DE COSSIO ECHEVERRIA,
Francisco Jose
92852 RUEIL-MALMAISON CEDEX (FR)**
• **DE NUNZIO, Giovanni
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A1- 3 936 824     FR-A1- 3 049 653**

• BERGMAN CECILIA ET AL: "Conflation of OpenStreetMap and Mobile Sports Tracking Data for Automatic Bicycle Routing", vol. 20, no. 6, 10 March 2016 (2016-03-10), GB, pages 848 - 868, XP055968646, ISSN: 1361-1682, Retrieved from the Internet <URL:https://onlinelibrary.wiley. com/doi/full-xml/10.1111/tgis.12192> [retrieved on 20221012], DOI: 10.1111/tgis.12192

## Description

### Domaine technique

La présente invention concerne le domaine de la détermination d'une route entre une zone géographique d'origine et une zone géographique de destination.

Le principal domaine d'application est l'analyse de la mobilité en termes de choix des routes les plus probables pour les déplacements entre deux zones d'un réseau routier. Il peut s'agir par exemple de déterminer les déplacements entre une zone d'habitation et une zone d'activités professionnelles. Ainsi, une telle détermination de la mobilité permet de dresser des constats (ex-post et ex-ante) sur l'impact des politiques publiques en termes d'aménagement et régulation sur la mobilité, ainsi que sur les émissions de polluants et la qualité de l'air, et sur la prévision du trafic.

En effet, le choix des itinéraires de la population devient un facteur clé pour les analyses des réseaux de transport et de leur performance, par exemple, en termes de temps total de déplacement, de distance totale parcourue et/ou de consommation d'énergie.

Cette analyse des déplacements entre deux zones permet aussi une évaluation comportementale des utilisateurs vis-à-vis du choix de la route pour leurs déplacements quotidiens.

### Technique antérieure

Les outils actuels de monitoring de la qualité de l'air ne permettent pas d'isoler et d'estimer avec précision la part d'émissions de polluant en usage réel due au transport routier ainsi que leur localisation spatiale. Il existe des outils de diagnostic d'énergie et d'émission des mobilités (DEEM) qui permettent aujourd'hui d'estimer l'impact d'un déplacement moyen entre deux zones d'une ville, mais cela est fait en supposant une distance à vol d'oiseau et une vitesse moyenne constante sur tout le trajet. Si les deux zones origine-destination sont grandes et/ou lointaines, cette méthode de l'état de l'art néglige forcément toute la variabilité en termes de routes possibles entre les deux zones, ainsi que la contribution de chaque route aux émissions totales des déplacements interzones.

Par conséquent, il s'avère difficile pour les villes de prendre les bonnes décisions en matière d'aménagement de l'infrastructure routière et de législation sans avoir à disposition des outils précis d'évaluation et de projection d'impact des mesures envisagées sur les émissions polluantes du transport routier et la qualité de l'air.

L'étude des schémas de mobilité ou du choix des itinéraires est un sujet récurrent dans la science des transports, et elle peut être divisée en deux catégories.

La première catégorie repose sur les modèles dits de choix discret, qui visent à expliquer le comportement de choix individuel par des préférences individuelles et une fonction d'utilité. Cette approche de l'analyse du choix de l'itinéraire tend à se baser sur des possibilités limitées, en considérant un faible nombre d'itinéraires et d'origines/destination, comme par exemple dans le document BERGMAN CECILIA ET AL: "Conflation of OpenStreetMap and Mobile Sports Tracking Data for Automatic Bicycle Routing",TRANSACTIONS IN GIS,vol. 20, no. 6 10 mars 2016 (2016-03-10), pages 848-868. La deuxième catégorie vise à résoudre le problème dit de charge du réseau, elle propose une approche plus globale pour déterminer les états statiques ou dynamiques du trafic sur l'ensemble du réseau de transport et, finalement, l'équilibre du réseau. Ceci est rendu possible en considérant la demande par rapport au choix de l'itinéraire parmi toutes les paires origine/destination de l'ensemble des zones considérées. L'inconvénient de cette deuxième approche est que la représentation mathématique mise en œuvre, basée sur des utilisateurs déterministes ou stochastiques, tend à ne pas prendre en compte toutes les variables pertinentes en raison d'arguments de simplification.

Par ailleurs, la technologie des données a connu une croissance exponentielle ces dernières années ; on est désormais capable non seulement d'enregistrer de très grands ensembles de données concernant des aspects très différents de la mobilité humaine, mais aussi de les analyser efficacement grâce à l'intelligence artificielle ou à l'apprentissage automatique. Les données sur la mobilité peuvent être recueillies sous différentes formes et leurs caractéristiques peuvent varier énormément. La collecte est souvent effectuée au moyen de téléphones cellulaires ou de dispositifs de géolocalisation (par exemple GPS pour « Global Positioning System ») embarqués. Les ensembles de données courants comprennent les journaux des systèmes de positionnement global (GPS) et les enregistrements détaillés des appels (CDR de l'anglais « Call Detail Record »). En général, ce type de représentation de la mobilité reste limité et imparfait. Par exemple, les données GPS avec une fréquence de 1Hz représentant le déplacement d'un utilisateur peuvent avoir des mesures largement inexactes (aberrations) ou des mesures absentes pendant plusieurs secondes.

Une méthode d'apprentissage non supervisée pour la détection des schémas de mobilité repose sur le regroupement des déplacements en familles qui partagent des caractéristiques spatio-temporelles. Le regroupement des trajectoires géographiques est une technique largement utilisée pour extraire des informations précieuses de grands ensembles de données qui sont autrement compliqués à traiter. La première tâche centrale de l'approche de regroupement est la définition d'une fonction qui détermine efficacement les similarités de trajectoires. Les complications typiques proviennent de la présence de bruit dans les données, de valeurs aberrantes et du fait que les trajectoires sont généralement formées par un nombre différent de points. Les choix populaires de fonctions de similarité de trajectoires discrètes incluent notamment : la distance euclidienne, la déformation temporelle dynamique, la plus longue sous-séquence commune, la distance d'édition, la distance de Hausdorff, et la distance de Fréchet. La deuxième tâche centrale de cette approche consiste à développer l'algorithme de « clustering » (regroupement) proprement dit, une fois la fonction de similarité correctement définie. Les algorithmes de clustering génériques peuvent être inadaptés à cette tâche, par exemple, la méthode K-means (pouvant être traduit par partitionnement en K-moyennes) n'est pas robuste par rapport aux valeurs aberrantes et ne peut pas produire des clusters de forme convexe. Une meilleure option pour le clustering de trajectoires est l'utilisation d'algorithmes de clustering basés sur la densité, en particulier ceux qui rejettent le bruit, comme le DBSCAN (de l'anglais « density-based spatial clustering of applications with noise » : il s'agit d'un algorithme fondé sur la densité dans la mesure qui s'appuie sur la densité estimée des grappes pour effectuer le partitionnement).

La mesure de la distance entre deux trajectoires peut être coûteuse en termes de calcul. Cela peut être particulièrement gênant lors du regroupement d'énormes ensembles de données de trajectoires, qui sont nécessaires pour l'extraction de modèles de mobilité utiles d'une population. En fait, la plupart des algorithmes de regroupement non supervisé ont une complexité supérieure ou égale à $O(N^2)$ où N est le nombre de trajectoires ; cela découle du calcul de la matrice de distance $N \times N$ formée par toutes les distances par paire. Traditionnellement, cela limite les études à des sous-ensembles de grands ensembles de données, puisque les analyses d'ensembles de données de trajectoires de taille standard peuvent prendre plusieurs jours.

Même s'il est possible de rassembler des ensembles de données relativement importants de trajectoires et de les regrouper efficacement, un défi connu reste la représentativité et le biais possible des données acquises. En effet, les véritables modèles de mobilité ne peuvent être déterminés que si les données elles-mêmes sont conformes à la réalité.

La demande de brevet US2013191314 concerne une méthode de détermination d'un choix de route préférée d'un utilisateur. Cette approche consiste en la recherche d'une route de déplacement la plus probable pour un utilisateur entre deux zones géographiques, puis en une analyse des caractéristiques liées à cette route. Cette approche est limitée à un seul utilisateur, et n'est pas adaptée à manipuler un grand nombre de données de plusieurs utilisateurs pour représenter la mobilité inter zones à une large échelle. En outre, une généralisation depuis l'utilisateur à la mobilité d'une ville est sujette à des problèmes de représentativité ou de biais. La demande de brevet US20060242108 concerne une méthode de fusion de données pour une optimisation de route, en particulier pour gérer les mouvements liés aux urgences. Cette approche est basée sur l'utilisation de différentes sources de données, notamment d'un système d'information géographique (SIG), dans le but d'étudier une route optimale pour une zone géographique et pour un évènement. Cependant, l'objectif de cette approche n'est pas d'analyser les choix de route, mais d'optimiser des variables associées aux routes possibles. De plus, la fusion de données est appliquée au niveau de capteurs pour augmenter la fiabilité des données. Ainsi, cette approche nécessite un équipement spécifique, tel qu'un onéreux capteur au sol, ou des caméras.

## Résumé de l'invention

La présente invention a pour but de déterminer une route entre deux zones géographiques, de manière représentative, rapide, avec une mémoire informatique limitée et sans capteur spécifique placé sur le réseau routier. L'invention concerne un procédé de détermination d'au moins une route entre une zone géographique d'origine et une zone géographique de destination. Le procédé acquiert des données de géolocalisation mesurées, réalise un regroupement de ces données de géolocalisation. De plus, le procédé détermine des itinéraires possibles entre les deux zones, et réalise un regroupement des données des itinéraires possibles. L'association des trajectoires représentatives des regroupements des deux aspects (trajets réalisés et itinéraires) permet de déduire les routes entre les deux zones géographiques. Ainsi, le procédé met en œuvre une fusion de trajectoires représentatives de données de géolocalisation mesurées et de trajectoires représentatives d'itinéraires, ce qui permet une robustesse et une représentativité de la route déterminée, sans nécessité de capteur spécifique sur le réseau routier. En outre, la méthode de regroupement mise en œuvre permet de se passer d'une étape de « mapmatching » (pouvant être traduit par cartospondance ou appariement sur une carte), ce qui permet de réduire le temps de calcul et la mémoire informatique utilisée.

L'invention concerne un procédé de détermination d'au moins une route entre une zone géographique d'origine et une zone géographique de destination selon la revendication 1.

Selon un mode de réalisation, on regroupe lesdites données de géolocalisation de trajets réalisés et/ou lesdites données de géolocalisation d'itinéraires déterminés, au moyen d'un algorithme de regroupement de type faisceaux rapides « Quick Bundles ».

Selon l'invention, on déduit ladite au moins une route au moyen d'une méthode de conflation desdites trajectoires représentatives desdits trajets réalisés et desdites trajectoires représentatives desdits itinéraires.

Avantageusement, préalablement à l'étape de regroupement desdites données de géolocalisation mesurées de trajets réalisés, on segmente lesdites données de géolocalisation mesurées de trajets réalises pour conserver des données de géolocalisation mesurées pertinentes, notamment par découpage des données de géolocalisation mesurées au sein de ladite zone géographique d'origine et/ou au sein de ladite zone géographique de destination.

Selon un aspect, pour déterminer au moins deux itinéraires entre ladite zone géographique d'origine et ladite zone géographique de destination, on détermine une pluralité de points d'origine dans ladite zone géographique d'origine et une pluralité de points de destination dans ladite zone géographique de destination à partir des points d'origine et des points de destination des trajectoires représentatives desdits trajets réalisés.

De manière avantageuse, préalablement à l'étape de regroupement d'itinéraires déterminés, on segmente lesdites itinéraires déterminés pour conserver des portions d'itinéraires pertinentes, notamment par découpage desdits itinéraires au sein de ladite zone géographique d'origine et/ou au sein de ladite zone géographique de destination.

Selon une option de réalisation, pour chaque trajectoire représentative et/ou pour chaque route, on détermine au moins une caractéristique choisie parmi la vitesse moyenne, la durée du trajet, le trafic.

De préférence, les étapes sont mises en œuvre pour une période temporelle donnée, notamment pour un mois, une semaine, un jour, un créneau horaire.

Conformément à un mode de réalisation, après l'étape de regroupement desdites données de géolocalisation mesurées de trajets réalisés, on conserve uniquement les regroupements pour lesquels le nombre de trajets réalisés et/ou le nombre d'utilisateurs desdits trajets réalisés est supérieur ou égal à un seuil prédéterminé.

En outre, l'invention concerne un procédé de détermination d'une quantité d'au moins un polluant chimique et/ou sonore émis par au moins un véhicule lors d'un déplacement au sein d'un réseau routier entre une zone géographique d'origine et une zone géographique de destination, selon la revendication 12 ainsi qu'un procédé de détermination de la consommation d'énergie d'au moins un véhicule au sein d'un réseau routier lors d'un déplacement entre la zone géographique d'origine et la zone géographique de destination, selon la revendication 13.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre les étapes du procédé selon un premier mode de réalisation de l'invention.

La figure 2 illustre les étapes du procédé selon un deuxième mode de réalisation de l'invention.

La figure 3 illustre les étapes du procédé selon un troisième mode de réalisation de l'invention.

La figure 4 illustre une carte de trajectoires représentatives de trajets réalisés pour l'application du procédé selon un mode de réalisation de l'invention pour un exemple.

La figure 5 illustre une carte de trajectoires représentatives d'itinéraires pour l'application du procédé selon un mode de réalisation de l'invention pour l'exemple de la figure 4.

La figure 6 illustre une carte avec les routes obtenues par l'application du procédé selon un mode de réalisation de l'invention pour l'exemple des figures 4 et 5.

La figure 7 illustre une carte avec les routes obtenues par l'application d'un procédé selon un art antérieur pour l'exemple des figures 4 à 6.

**Description des modes de réalisation**

L'invention concerne un procédé de détermination d'au moins une route pour un véhicule entre une zone géographique d'origine et une zone géographique de destination. On appelle zone géographique un territoire donné, par exemple une région, un département, une communauté de communes, une ville, un quartier d'une ville, etc. Une zone géographique comprend par conséquent une pluralité de points (respectivement une pluralité de points d'origine et une pluralité de points de destination de déplacements). A titre d'exemple uniquement, il peut s'agir de déterminer les déplacements entre une zone géographique d'habitation et une zone géographique d'activités professionnelles. La zone géographique d'origine correspond au territoire de départ d'un déplacement, et la zone géographique de destination correspond au territoire d'arrivée d'un déplacement. Ainsi, l'invention permet de déterminer des choix de la route que les usagers d'un réseau routier pourraient faire entre n'importe quelle paire de points issus des zones géographiques origine-destination. Les zones géographiques d'origine et de destination peuvent avoir une forme de polygone. Les zones géographiques d'origine et de destination peuvent être des zones voisines ou peuvent être éloignées.

De préférence, le véhicule est un véhicule motorisé circulant au sein du réseau routier, tel qu'un véhicule automobile, un deux-roues, un poids lourd, un car, un bus. Alternativement, le véhicule peut être un véhicule de mobilité douce : une bicyclette, une trottinette, etc.

Selon l'invention, on met en œuvre les étapes suivantes :

1. Acquisition des données de géolocalisation mesurées

2. Regroupement des données de géolocalisation mesurées

3. Détermination de trajectoires représentatives des données de géolocalisation mesurées

4. Détermination d'itinéraires

5. Regroupement des itinéraires

6. Détermination de trajectoires représentatives des itinéraires

7. Détermination de routes

Ces étapes peuvent être mises en œuvre par des moyens informatiques, notamment un ordinateur et/ou un serveur. Ces étapes sont détaillées dans la suite de la description.

Dans la présente demande, le terme « trajet » définit les déplacements réalisés et mesurés, le terme « itinéraire » définit des déplacements obtenus par un système d'information géographique, le terme « trajectoire » définit un déplacement représentatif d'un groupement, et le terme « route » définit un déplacement obtenu par le procédé selon l'invention.

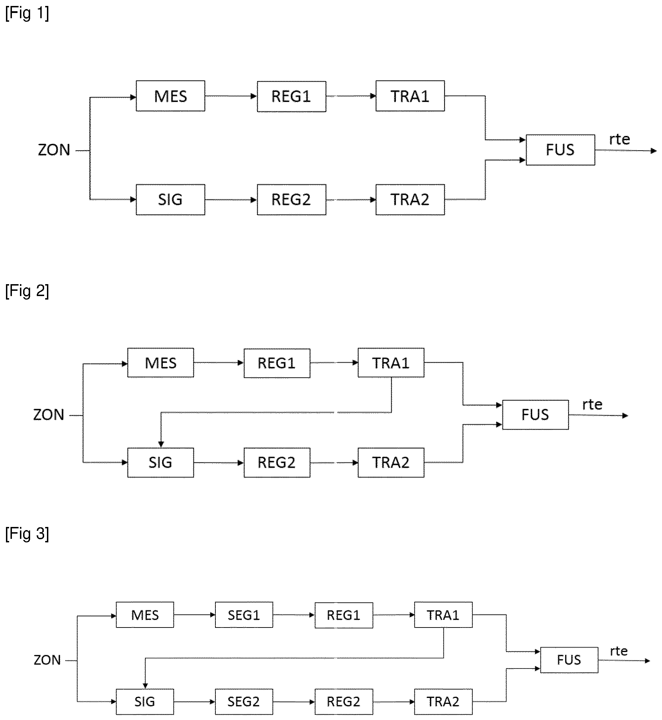

La figure 1 illustre, schématiquement et de manière non limitative, les étapes du procédé selon un premier mode de réalisation de l'invention. A partir des zones géographiques d'origine et de destination ZON, on acquiert des données de géolocalisation mesurées MES. On regroupe REG1 les données de géolocalisation mesurées MES. Pour chaque groupement de données de géolocalisation mesurées REG1, on détermine une trajectoire représentative TRA1. A partir des zones géographiques d'origine et de destination ZON, on détermine SIG au moins deux itinéraires. On regroupe REG2 les itinéraires. Pour chaque groupement d'itinéraires, on détermine une trajectoire représentative TRA2. Ensuite, on fusionne FUS les trajectoires représentatives obtenues par les données de géolocalisation mesurées et obtenues avec les itinéraires pour déterminer au moins une route rte entre la zone géographique d'origine et la zone géographique de destination.

La figure 2 illustre, schématiquement et de manière non limitative, les étapes du procédé selon un deuxième mode de réalisation de l'invention. Les étapes identiques au mode de réalisation de la figure 1 ne sont pas redécrits. Pour ce deuxième mode de réalisation, la détermination SIG d'au moins deux itinéraires prend en compte les trajectoires représentatives des trajets réalisés. En particulier les trajectoires représentatives TRA peuvent permettre de définir des points d'origine et des points de destination pour la détermination SIG des itinéraires.

Selon un mode de réalisation, une étape de segmentation peut être prévue entre l'étape d'acquisition des données de géolocalisation des données mesurées et l'étape de regroupement des données mesurées et/ou entre l'étape de détermination des itinéraires et l'étape de regroupement des itinéraires. Pour ce mode de réalisation, le procédé peut comporter les étapes suivantes :

1. Acquisition des données de géolocalisation mesurées

1'. Segmentation des données de géolocalisation mesurées

2. Regroupement des données de géolocalisation mesurées

3. Détermination de trajectoires représentatives des données de géolocalisation mesurées

4. Détermination d'itinéraires

4'. Segmentation des itinéraires

5. Regroupement des itinéraires

6. Détermination de trajectoires représentatives des itinéraires

7. Détermination de routes

Ces étapes peuvent être mises en œuvre par des moyens informatiques, notamment un ordinateur et/ou un serveur. Ces étapes sont détaillées dans la suite de la description.

La figure 3 illustre, schématiquement et de manière non limitative, les étapes du procédé selon un troisième mode de réalisation de l'invention. Les étapes identiques au mode de réalisation de la figure 2 ne sont pas redécrits. Le procédé comprend une étape de segmentation SEG1 des données de géolocalisation mesurées MES, et ensuite l'étape de regroupement REG1 prend en compte les données de géolocalisation segmentées. Le procédé comprend également une étape de segmentation SEG2 des itinéraires SIG, et ensuite l'étape de regroupement REG2 prend en compte les itinéraires segmentés.

Conformément à une mise en œuvre, les étapes du procédé peuvent être mises en œuvre pour une période temporelle donnée. Par exemple, pour un mois, une semaine, un jour ou un créneau horaire. Cette mise en œuvre permet de prendre en compte la variabilité des conditions de circulation (vacances scolaires, jours fériés, saisons, mois, heures de pointe, etc.).

1. Acquisition des données de géolocalisation mesurées

Lors de cette étape, on acquiert des données de géolocalisation mesurées de trajets réalisés entre la zone géographique d'origine et la zone géographique de destination. Les données de trajets réalisés peuvent comporter des données mesurées lors de trajets antérieurs, notamment la vitesse, la position et l'altitude. De préférence, les données de trajets réalisés peuvent être mesurées au moyen d'un système de géolocalisation, tel qu'un capteur de positionnement par satellite, tel que le système GPS (de l'anglais Global Positioning System), le système Galileo, etc. Le système de géolocalisation peut être embarqué à bord du véhicule ou déporté (par exemple au moyen d'un téléphone intelligent, de l'anglais « smartphone »).

Selon un mode de réalisation, lors de cette étape, on peut réaliser les mesures de géolocalisation lors de déplacements d'au moins un véhicule.

De préférence, ces données de géolocalisation peuvent se présenter sous la forme de séquences horodatées de paires latitude/longitude (trajets), de sorte que des valeurs telles que la durée et la vitesse moyenne puissent être estimées pour chaque séquence. Afin de maximiser la quantité de données disponibles, les trajectoires passant par les zones sélectionnées peuvent également être prises en compte, même si leurs points de départ et d'arrivée ne se trouvent pas dans ces zones.

Avantageusement, les données de géolocalisation peuvent être non traitées, c'est-à-dire non appariées à un réseau de transport sous-jacent et/ou contenant des valeurs aberrantes. En d'autres termes, pour ce mode de réalisation, le procédé ne comprend pas d'étape de « mapmatching » (pouvant être traduit par cartospondance) des données de géolocalisation mesurées, ce qui permet de réduire le temps de calcul et la mémoire informatique utilisée.

Pour le mode de réalisation pour lequel les étapes sont mises en œuvre pour une période temporelle donnée, lors de cette étape, on peut acquérir les données de géolocalisation mesurées des trajets réalisés qui correspondent à la période temporelle donnée.

1'. Segmentation des données de géolocalisation mesurées

Lors de cette étape facultative, on segmente lesdites données de géolocalisation mesurées de trajets réalisés pour conserver des données de géolocalisation mesurées de trajets réalisés pertinentes. Cette étape permet un découpage adéquat des trajets réalisés pour ignorer les différences non pertinentes dans les points de départ et d'arrivée des trajets réalisés.

Selon un mode de réalisation, la segmentation des données de géolocalisation peut être mise en œuvre par découpage des données de géolocalisation mesurées au sein de la zone géographique d'origine et/ou au sein de la zone géographique de destination. Cette segmentation peut de préférence être mise en œuvre pour des zones géographiques d'origine et de destination qui ne sont pas voisines. En d'autres termes, cette segmentation permet de conserver des portions de trajet réalisés entre les zones géographiques d'origine et de destination.

Selon un mode de réalisation, pour zones voisines ou non voisines, on peut aussi faire un découpage alternatif qui permet de conserver les données à l'intérieur des zones géographiques pour la partie partagée entre les trajets réalisés. Pour faire ça, on trouve les deux points de convergence entre les trajets (zone géographique d'origine et zone géographique de destination) en filtrant les valeurs aberrantes de la succession d* telle que définie pour la distance de Fréchet ci-dessous.

2. Regroupement des données de géolocalisation mesurées

Lors de cette étape, on regroupe les données de géolocalisation mesurées des trajets réalisés (et le cas échéant segmentés), acquises à l'étape 1, en groupements représentatifs de trajets réalisés. Autrement dit, lors de cette étape, on forme des « clusters » (groupements) de trajets réalisés similaires. Cette étape peut être mise en œuvre au moyen d'une détermination d'une similarité entre les trajets réalisées. Cette similarité peut être déterminée avec la distance de Fréchet entre les trajets réalisés. Ainsi, la méthode pour identifier des trajets similaires utilise de préférence la distance de Fréchet. La distance de Fréchet est une mesure symétrique largement utilisée de la similarité entre deux courbes qui ne dépend que de l'emplacement des points et de leur ordre. Elle est généralement illustrée comme la distance de la laisse la plus courte qui permet à un homme de promener son chien le long de leurs chemins séparés. Alternativement, le procédé peut mettre en œuvre d'autres distances, telles que la distance euclidienne, la déformation temporelle dynamique, la plus longue sous-séquence commune, la distance d'édition, la distance de Hausdorff.

Dans sa version continue, la distance de Fréchet est donnée par la formule :

$$F(A,B) = \inf_{\alpha,\beta} \max_{t \in [0,1]} d(A(\alpha(t)), B(\beta(t)))$$

où A et B sont des courbes sur un espace métrique (distance d), et où $\alpha$ et $\beta$ représentent différentes paramétrisations de courbes.

Par exemple, on peut construire la distance de Fréchet au moyen des étapes suivantes :

- On forme une polyligne reliant les points d'un premier trajet,
- On forme une polyligne reliant les points d'un deuxième trajet, et ensuite
- On forme l'ensemble des liaisons qui relient un point de chaque polyligne.

L'étape de détermination des liaisons qui relient un point de chaque polyligne est effectuée de manière dynamique et récursive. Deux trajets discrets X et Y de longueurs respectives N et M sont considérés ici. La première étape concerne la construction d'une matrice de distance cumulative notée D qui contient à la ligne n, et colonne m, la distance de Fréchet discrète calculée du début de chaque trajet jusqu'au points n et m (où $1 \le n \le N$ et $1 \le m \le M$). On peut alors écrire :

$$D(n,m) = F_d(Xn, Ym)$$

Avec $F_d$ la version discrète de la distance de Fréchet, Xn, Ym les trajets tronqués de longueur n et m. La différence entre la version continue et discrète de la distance de Fréchet vient du fait que l'on ne considère pas les paramétrisations $\alpha$ et $\beta$ comme des fonctions continues du temps mais uniquement l'ordonnancement des liaisons des trajets.

La matrice peut être calculée récursivement comme suit :

$$D(n,m) = min(D(n-1, m-1), D(n-1, m), D(n, m-1)) + d(x_n, y_m)$$

Où $x_n$ correspond au nième élément du trajet X et $y_m$ le mième élément du trajet Y, et d la distance entre le nième élément du trajet X et le mième élément du trajet Y.

La construction des liens est alors réalisée dans le sens inverse (en partant des points N et M jusqu'au début des deux trajets) en définissant les paires de points avec la distance minimal soit :

$$P_{i-1} = \arg min(D(n-1, m-1), D(n-1, m), D(n, m-1))$$

On obtient alors le séquencement optimal $P = [P_n, ... P_1]$ où chaque $P_i$ représente un couple de point $x_k$ et $y_l$. En parallèle, il est possible d'obtenir la séquence de distance optimale $d^* = [d_n, ... , d_1]$ où $d_i$ représente la distance métrique entre les points $x_k$ et $y_l$ associées à $P_i$. Enfin, la distance de Fréchet discrète s'obtient en prenant la moyenne de la séquence de distance $d^*$.

Selon un mode de réalisation de cette étape, on peut regrouper les données de géolocalisation mesurées des trajets réalisés au moyen d'un méthode d'apprentissage non supervisée, telle qu'un algorithme de clustering, notamment au moyen d'un algorithme de faisceaux rapides (de l'anglais « Quick Bundles »). Cet algorithme Quick Bundles est un algorithme récursif basé sur la distance entre les lignes de courant et un seuil de similarité associé. Les centroïdes des lignes (c'est-à-dire les lignes représentatives d'un cluster formé par l'algorithme) sont générés à la volée (au fur et à mesure) et comparés aux lignes de flux entrantes jusqu'à ce qu'elles soient toutes regroupées. Dans le cadre de ce mode de réalisation, cet algorithme Quick Bundles peut être appliqué aux paires de coordonnées latitude/longitudes des données de géolocalisation mesurées. L'algorithme de Quick Bundles permet de traiter un nombre important de données de géolocalisation, avec un temps rapide de calcul et une mémoire informatique limitée.

Le document « E. Garyfallidis, M. Brett, M. Correia, G. Williams, I. Nimmo-Smith, "QuickBundles, a Method for Tractography Simplification", Frontiers in neuroscience, 2012, vol. 6., no. 175 » présente l'algorithme en temps généralement linéaire appelé QuickBundles (QB) pour le regroupement massif de faisceaux neuroanatomiques représentés par des ensembles de données RM de diffusion. Les performances en temps de l'algorithme sont encore améliorées d'un facteur 20 dans le document « E. Garyfallidis, M.-A. Côté, F. Rheault, M. Descoteaux, "QuickBundlesX: Sequential clustering of millions of streamlines in multiple levels of detail at record execution time", 24th international Society of Magnetic Resonance in Medicine (ISMRM), 2016 ».

Selon un aspect, à la fin de cette étape, on peut conserver uniquement les groupements pour lesquels le nombre de trajets réalisés au sein du groupement et/ou le nombre d'utilisateurs différents au sein du groupement est supérieur ou égal à un seuil prédéterminé. Ainsi, on conserve les groupements les plus représentatifs.

### 3. Détermination de trajectoires représentatives des données de géolocalisation mesurées

Lors de cette étape, pour chaque groupement représentatif (pour chaque cluster) déterminé à l'étape 2, on détermine une trajectoire représentative. En d'autres termes, pour chaque cluster, on détermine une trajectoire qui relie la zone géographique d'origine à la zone géographique de destination et qui représente le cluster.

De manière avantageuse, la trajectoire représentative peut être issue de l'algorithme de regroupement. Pour le mode de réalisation qui met en œuvre l'algorithme de Quick Bundles, la trajectoire représentative peut correspondre au centroïde obtenu par cet algorithme. Pour chaque groupement, on peut procéder au calcul des centroïdes comme suit : 1) rééchantillonnage des trajectoires afin que celles-ci aient le même nombre de points, 2) moyenne de la latitude et de la longitude par point de données numéroté.

Conformément à une mise en œuvre de cette étape, on peut déterminer en outre au moins une caractéristique de la trajectoire représentative du cluster, ainsi qu'éventuellement une distribution de cette caractéristique. Cette caractéristique peut notamment être choisie entre la vitesse moyenne, la durée de parcours de la trajectoire, la longueur du parcours de la trajectoire, le trafic, ou le taux d'utilisation (également appelé proportion d'utilisation) de cette trajectoire représentative, etc. La vitesse moyenne et la durée de parcours de la trajectoire peuvent notamment être déterminées à partir des données temporelles liées aux données de géolocalisation mesurées des trajets réalisés appartenant au groupement considéré. La longueur du parcours peut notamment être déterminée à partir des données de géolocalisation mesurées appartenant au groupement considéré. Le trafic et le taux d'utilisation de cette trajectoire peuvent être notamment déterminés à partir du nombre de données de géolocalisations mesurées appartenant au groupement considéré. En d'autres termes, plus la taille du cluster est importante (c'est-à-dire plus il contient de trajets réalisés) plus le trafic et le taux d'utilisation sont importants.

### 4. Détermination d'itinéraires

Lors de cette étape, on détermine au moins deux itinéraires entre la zone géographique d'origine et la zone géographique de destination, au moyen d'un système d'information géographique (SIG ou en anglais GIS pour « Geographic information system »). Here ™ Maps, Google Maps ™, OpenStreetMap ™ sont des exemples de système d'information géographique. Ainsi, lors de cette étape le système d'information géographique détermine au moins deux chemins possibles entre la zone géographique d'origine et la zone géographique de destination. Le système d'information géographique peut notamment mettre en œuvre un algorithme de plus court chemin, un algorithme qui minimise la consommation d'un véhicule, un algorithme qui minimise la quantité de polluants émis, etc. Ainsi, l'invention prend en compte à la fois des données mesurées et des données obtenues par le SIG. De cette manière, le procédé permet de déterminer une route, tout en réduisant l'incertitude et en augmentant la fiabilité en fusionnant deux sources d'information : un calcul d'itinéraires SIG et des données de géolocalisation mesurées d'usage réel sur un territoire.

Les points d'origine et de destination des itinéraires appartiennent respectivement aux zones géographiques d'origine et de destination.

Selon un mode de réalisation de l'invention, les points d'origine et de destination des itinéraires peuvent correspondre aux points d'origine et de destination des trajectoires représentatives déterminées à l'étape 3 pour les trajets réalisés. Ainsi, les itinéraires déterminés démarrent et se terminent au même endroit que les trajectoires représentatives.

Alternativement ou cumulativement, les points d'origine et de destination des itinéraires peuvent être agencés respectivement à proximité de la frontière des zones géographiques d'origine et de destination, en particulier lorsque ces zones géographiques ne sont pas voisines.

Alternativement ou cumulativement, les points d'origine et de destination peuvent être les sommets des polygones des zones géographiques d'origine et de destination. Cet agencement permet de se passer des déplacements au sein des zones géographiques d'origine et de destination.

Pour le mode de réalisation pour lequel on met en œuvre le procédé pour une période temporelle donnée, on peut répéter cette détermination des itinéraires pour différents moments au sein de la période temporelle donnée. Par exemple, si la période temporelle considérée est une matinée, on peut générer des itinéraires pour des différents instants espacés d'un intervalle de trente minutes.

4'. Segmentation des itinéraires

Lors de cette étape facultative, on segmente les itinéraires déterminés à l'étape 4 pour conserver des portions des itinéraires pertinentes. Cette étape permet un découpage adéquat des itinéraires pour ignorer les différences non pertinentes dans les points de départ et d'arrivée des itinéraires.

Selon un mode de réalisation, la segmentation des itinéraires peut être mise en œuvre par découpage des itinéraires au sein de la zone géographique d'origine et/ou au sein de la zone géographique de destination. Cette segmentation peut de préférence être mise en œuvre pour des zones géographiques d'origine et de destination qui ne sont pas voisines. En d'autres termes, cette segmentation permet de conserver des portions d'itinéraires entre les zones géographiques d'origine et de destination.

Selon un mode de réalisation, pour zones voisines ou non voisines, on peut aussi faire un découpage alternatif qui permet de conserver les itinéraires. Pour faire cela, on trouve les deux points de convergence entre les itinéraires (zone géographique d'origine et zone géographique de destination) en filtrant les valeurs aberrantes de la succession d* telle que définie pour la distance de Fréchet ci-dessus.

5. Regroupement des itinéraires

Lors de cette étape, on regroupe les itinéraires (et le cas échéant segmentés) déterminés à l'étape 4 en groupements représentatifs de trajets. Autrement dit, lors de cette étape, on forme des « clusters » (groupements) d'itinéraires. Cette étape peut être mise en œuvre au moyen d'une détermination d'une similarité entre les trajets réalisées. Cette similarité peut être déterminée avec la distance de Fréchet entre les trajets réalisés. Ainsi, la méthode pour identifier des trajets similaires utilise de préférence la distance de Fréchet. Alternativement, le procédé peut mettre en œuvre d'autres distances, telles que la distance euclidienne, la déformation temporelle dynamique, la plus longue sous-séquence commune, la distance d'édition, la distance de Hausdorff.

Selon un mode de réalisation de cette étape, on peut regrouper les itinéraires au moyen d'un méthode d'apprentissage non supervisée, telle qu'un algorithme de clustering.

6. Détermination de trajectoires représentatives des itinéraires

Lors de cette étape, pour chaque groupement représentatif (pour chaque cluster) déterminé à l'étape 5, on détermine une trajectoire représentative. En d'autres termes, pour chaque cluster, on détermine une trajectoire qui relie la zone géographique d'origine à la zone géographique de destination et qui représente le cluster.

De manière avantageuse, la trajectoire représentative peut être issue de l'algorithme de regroupement. Pour le mode de réalisation qui met en œuvre de l'algorithme de Quick Bundles, la trajectoire représentative peut correspondre au centroïde obtenu par cet algorithme. Pour les regroupements, on peut procéder au calcul des centroïdes comme suit : 1) rééchantillonnage des trajectoires afin que celles-ci aient le même nombre de points, 2) moyenne de la latitude et de la longitude par point de données numéroté.

Conformément à une mise en œuvre de cette étape, on peut déterminer en outre au moins une caractéristique de la trajectoire représentative du cluster, ainsi qu'éventuellement une distribution de cette caractéristique. Cette caractéristique peut notamment être choisie entre la vitesse moyenne, la durée de parcours de la trajectoire, la longueur du parcours de la trajectoire, le trafic, ou le taux d'utilisation (également appelé proportion d'utilisation) de cette trajectoire représentative. La vitesse moyenne et la durée de parcours de la trajectoire peuvent notamment être déterminées à partir des données temporelles des itinéraires appartenant au groupement considéré. La longueur du parcours peut notamment être déterminée à partir des itinéraires appartenant au groupement considéré. Le trafic et le taux d'utilisation de cette trajectoire peuvent être notamment déterminés à partir du nombre d'itinéraires par échantillonnage à l'intérieur de la période considérée. En d'autres termes, plus la taille du cluster est importante (c'est-à-dire plus il contient d'itinéraires à des intervalles temporels différents) plus le trafic et le taux d'utilisation sont important.

7. Détermination de routes

Lors de cette étape, on détermine au moins une route, de préférence une pluralité de routes, qui relie la zone géographique d'origine et la zone géographique de destination. Pour cela, on compare et on associe les trajectoires représentatives des trajets réalisés déterminées à l'étape 3 et les trajectoires représentatives des itinéraires déterminées à l'étape 6. Ainsi, à la fin de cette étape, on détermine une ou plusieurs routes parmi les trajectoires représentatives déterminées lors des étapes précédentes.

Selon un mode de réalisation de l'invention, on peut déterminer lors de cette étape, une caractéristique et éventuellement la distribution de cette caractéristique de chaque route déterminée. Cette caractéristique peut notamment être choisie entre la vitesse moyenne, la durée de parcours de la trajectoire, la longueur du parcours de la trajectoire, le trafic, ou le taux d'utilisation (également appelé proportion d'utilisation) de cette route.

Lors de cette étape, on peut apparier les centroïdes (i. e. les trajectoires représentatives) de chaque collection (une collection correspond aux trajets réalisés et l'autre collection correspond aux itinéraires) en minimisant la distance de Fréchet et en considérant un seuil de distance. De cette façon, la plupart des centroïdes des collections sont appariés, cependant, certains centroïdes peuvent rester non appariés et suggérer de nouveaux chemins de déplacement pour l'autre collection. En d'autres termes, il pourrait y avoir plus de trajectoires représentatives pour les itinéraires que de trajectoires représentatives pour les trajets réalisés, et inversement.

Ensuite, on réalise une fusion des trajectoires représentatives pour déterminer l'au moins une route. Cette fusion peut s'appliquer également à la caractéristique déterminée à l'étape 3 ou 6. Selon l'invention, on met en œuvre une méthode de fusion par une méthode de « conflation » (pouvant être traduite par « amalgame »). Une telle méthode est décrite notamment dans le document : « T.P. Hill, J. Miller, "How to combine independent data sets for the same quantity", Chaos: An Interdisciplinary Journal of Nonlinear Science, 2011, vol. 21, no. 3, p. 033102. ». La méthode de conflation permet de combiner différentes fonctions de densité de probabilité représentant une valeur en évitant les inconvénients habituels d'autres méthodes telles que la moyenne des probabilités ou des données. La conflation peut se définir comme le processus de combinaison d'informations géographiques provenant de sources qui se chevauchent afin de conserver des données exactes, de minimiser la redondance et de concilier les conflits de données. Ainsi la conflation est une technique de consolidation optimale des distributions, qui résume plusieurs distributions de données d'entrée en une seule distribution postérieure. Cette technique s'oppose aux problèmes statistiques standard basés sur des estimations ponctuelles ou des intervalles de confiance. Au contraire des méthodes de l'art antérieur (estimation de points ou intervalles de confiance), cette méthode ne réalise pas de transformations non naturelles de la variance, de l'augmentation de l'incertitude, ou du changement de la forme générale de la distribution. Parmi les propriétés importantes de cette méthode, la fusion de distributions normales est à nouveau normale.

La fusion statistique d'information entre les itinéraires SIG et données de géolocalisation réelles peut permettre notamment d'obtenir des distributions de probabilité sur la durée de trajet et sur la vitesse moyenne de chacune des routes identifiées par le procédé. Enfin, l'invention peut être utilisée pour définir une proportion entre les routes identifiées, c'est-à-dire un « poids » pour chaque route qui dépend du nombre d'utilisateurs et de trajets observés dans les données réelles, ainsi que des suggestions de routes provenant de du système d'information géographie SIG utilisé.

Selon une mise en œuvre de l'invention, cette technique de fusion peut également être appliquée localement, c'est-à-dire en considérant la fusion d'informations entre les sous-trajectoires et les liens de route correspondants du SIG. Enfin, on peut estimer la proportion de flux de déplacement entre les zones en considérant à la fois la distribution des données réelles et les informations sur les routes du SIG.

Conformément une mise en œuvre de l'invention, la proportion pour une période de temps donnée TP et une route représentative indexée RP peut être calculée comme suit. On considère d'abord NP défini comme le nombre total de routes correspondant à TP, c'est-à-dire le nombre de centroïdes (trajectoires représentatives) de données de trajets réalisés plus le nombre de trajectoires représentatives non identifiées ou nouvelles suggérées par le SIG. Si la route représentative RP est un nouveau chemin suggéré par le SIG, alors, par exemple, on peut simplement considérer une proportion uniforme donnée par 100/NP. Si RP est au contraire un centroïde représentatif construit à partir des données de géolocalisation mesurées de trajets réels, alors la proportion attribuée est donnée par un facteur constant multipliant le rapport entre le nombre total de trajectoires représentatives correspondant à RP et le nombre total de trajectoires correspondant à tous les centroïdes considérés dans la période TP. Le facteur constant est tel que la somme des proportions de toutes les trajectoires représentatives est égale à 100. Cette affectation des proportions tient compte à la fois du flux réel de données et de son éventuelle non-représentativité. Cependant, au lieu de supposer une distribution uniforme sur les nouvelles routes, on peut éventuellement utiliser d'autres types d'informations provenant du système d'information géographique SIG afin de déterminer des proportions plus précises, comme par exemple les temps de parcours, l'écart entre les temps de parcours des routes, la longueur, etc.

Le procédé peut comporter une étape facultative d'affichage de l'au moins une route déterminée. Lors de cette étape facultative, on peut afficher la ou les route(s) sur une carte routière. Cet affichage peut prendre la forme d'une note ou d'un code couleur. Le cas échéant, une note ou une couleur peut être associée à une caractéristique (vitesse, trafic, etc.)

de la route considérée. Cet affichage peut être réalisé à bord d'un véhicule : sur le tableau de bord, sur un dispositif portatif autonome, tel qu'un appareil de géolocalisation (de type GPS), un téléphone portable (de type téléphone intelligent). Il est également possible d'afficher le profil de vitesse sur un site internet. De plus, la ou les route(s) déterminée(s) peut/peuvent être partagée(s) avec les pouvoirs publics (par exemple gestionnaire de la voirie) et les entreprises de travaux publics. Ainsi, les pouvoirs publics et les entreprises de travaux publics peuvent optimiser l'infrastructure routière, pour en améliorer la sécurité ou les émissions polluantes.

La présente invention concerne également un procédé de détermination d'une quantité d'au moins un polluant chimique et/ou sonore émis par au moins un véhicule au sein d'un réseau routier lors d'un déplacement entre la zone géographique d'origine et la zone géographique de destination. Pour ce procédé de détermination d'une quantité d'au moins un polluant émis, on met en œuvre les étapes suivantes :

a) On détermine au moins une route entre la zone géographique d'origine et la zone géographique de destination au moyen du procédé de détermination d'au moins une route selon l'une des caractéristiques précédentes, et on en déduit une caractéristique de la vitesse du véhicule pour la route ; et

b) on applique un modèle microscopique d'émissions polluantes, chimiques et/ou sonores, à la caractéristique de vitesse du véhicule pour la route pour prédire une quantité d'au moins un polluant chimique et/ou sonore émis sur la route considérée, le modèle d'émissions polluantes étant un modèle qui relie la vitesse du véhicule à une quantité de polluants chimiques et/ou sonores émis par le véhicule.

Ces étapes peuvent être mises en œuvre par des moyens informatiques.

Par exemple, le modèle microscopique peut correspondre au modèle tel que décrit dans la demande de brevet FR3049653 (WO 2017/174239) ou au modèle COPERT (de l'anglais « COmputer Program to calculate Emissions from Road Transports », pouvant être traduit par programme informatique de calcul des émissions des transports routiers).

L'étape d'application du modèle microscopique peut également prendre en compte le trafic et/ou le taux d'utilisation, qui peuvent être obtenus par le procédé de détermination de route. Ainsi, la quantité déterminée des émissions polluantes chimique et/ou sonore est représentative de l'ensemble des déplacements entre les deux zones géographiques.

De manière avantageuse, le procédé peut comporter une étape facultative d'affichage des quantités des polluants chimiques et/ou sonores émis par au moins un véhicule pour un déplacement entre la zone géographique d'origine et la zone géographique de destination. Lors de cette étape facultative, on peut afficher les quantités de polluants émis sur une carte routière. Cet affichage peut prendre la forme d'une note ou d'un code couleur. Le cas échéant, une note ou une couleur peut être associée à chaque liaison du réseau routier. Cet affichage peut être réalisé à bord d'un véhicule : sur le tableau de bord, sur un dispositif portatif autonome, tel qu'un appareil de géolocalisation (de type GPS), un téléphone portable (de type téléphone intelligent). Il est également possible d'afficher les émissions polluantes sur un site internet. De plus, les émissions polluantes prédites peuvent être partagées avec les pouvoirs publics (par exemple gestionnaire de la voirie) et les entreprises de travaux publics. Ainsi, les pouvoirs publics et les entreprises de travaux publics peuvent optimiser l'infrastructure routière, pour en améliorer les émissions polluantes.

La présente invention concerne également un procédé de détermination de la consommation d'énergie (par exemple carburant ou énergie électrique) d'au moins un véhicule au sein d'un réseau routier lors d'un déplacement entre la zone géographique d'origine et la zone géographique de destination. Pour ce procédé de détermination d'une consommation énergétique, on met en œuvre les étapes suivantes :

a) On détermine au moins une route entre la zone géographique d'origine et la zone géographique de destination au moyen du procédé de détermination d'au moins une route selon l'une des caractéristiques précédentes, et on en déduit une caractéristique de la vitesse du véhicule pour la route ; et

b) on applique un modèle microscopique de consommation énergétique à la caractéristique de vitesse du véhicule pour la route pour prédire une consommation d'énergie sur la route considérée, le modèle de consommation énergétique étant un modèle qui relie la vitesse du véhicule à une consommation énergétique d'un véhicule.

Ces étapes peuvent être mises en œuvre par des moyens informatiques.

L'étape d'application du modèle microscopique peut également prendre en compte le trafic et/ou le taux d'utilisation, qui peuvent être obtenus par le procédé de détermination de route. Ainsi, la quantité déterminée de la consommation énergétique est représentative de l'ensemble des déplacements entre les deux zones géographiques.

De manière avantageuse, le procédé peut comporter une étape facultative d'affichage de la consommation énergétique par au moins un véhicule pour un déplacement entre la zone géographique d'origine et la zone géographique de destination. Lors de cette étape facultative, on peut afficher la consommation énergétique sur une carte routière. Cet affichage peut prendre la forme d'une note ou d'un code couleur. Le cas échéant, une note ou une couleur peut être associée à chaque liaison du réseau routier. Cet affichage peut être réalisé à bord d'un véhicule : sur le tableau de bord, sur un dispositif portatif autonome, tel qu'un appareil de géolocalisation (de type GPS), un téléphone portable (de type téléphone intelligent). Il est également possible d'afficher les émissions polluantes sur un site internet. De plus, les émissions polluantes prédites peuvent être partagées avec les pouvoirs publics (par exemple gestionnaire de la voirie) et les entreprises de travaux publics. Ainsi, les pouvoirs publics et les entreprises de travaux publics peuvent optimiser l'infrastructure routière, pour en améliorer les émissions polluantes.

**Exemples**

Les avantages du procédé selon l'invention ressortiront des exemples d'application décrits ci-après.

Dans le but d'illustrer le procédé de détermination de routes selon l'invention, on considère un cas de déplacement en véhicule automobile entre deux zones données de la métropole Lyonnaise, ainsi qu'une période temporelle mensuelle et un créneau horaire choisis pour les jours ouvrés. Pour cet exemple, la zone géographique d'origine correspond aux premier et deuxième arrondissements de Lyon et la zone géographique de destination correspond à la ville de Bron.

Des données de géolocalisation de trajets mesurés entre le 01/01/2017 et 01/01/2022 sont acquis, ces données de géolocalisation sont des données GPS horodatées. Les créneaux horaires définis sont de 6h à 12h et de 14h à 20h. Les données de géolocalisation en dehors de ces créneaux horaires sont groupées ensemble. Le système d'information géographique SIG est l'outil de navigation issu de l'application HERE ™ Maps.

Etant donné que les deux zones géographiques ne sont pas des zones voisines, on applique une segmentation des données de géolocalisation afin d'analyser la mobilité entre les zones et non à l'intérieur de celles-ci. De plus, un ré-échantillonnage des trajectoires est fixé à une valeur par défaut de 256 points et le seuil de distance est de 100 mètres. Il est important de noter qu'un groupe de trajectoires pour une fenêtre de temps donnée est considéré comme représentatif s'il y a au moins 10 trajets enregistrés qui sont effectués par au moins 5 utilisateurs différents.

Le nombre total de trajets réalisés qui correspond à la période temporelle et aux zones géographiques d'origine/destination est de 2289. L'application de l'étape de regroupement par application de l'algorithme de Quick Bundles forme alors 424 clusters (groupements). Parmi ces clusters, on conserve quatre clusters qui correspondent au critère énoncé ci-dessus (au moins 10 trajets enregistrés qui sont effectués par au moins 5 utilisateurs différents). Puis on détermine les trajectoires représentatives de chacun de ces 4 clusters.

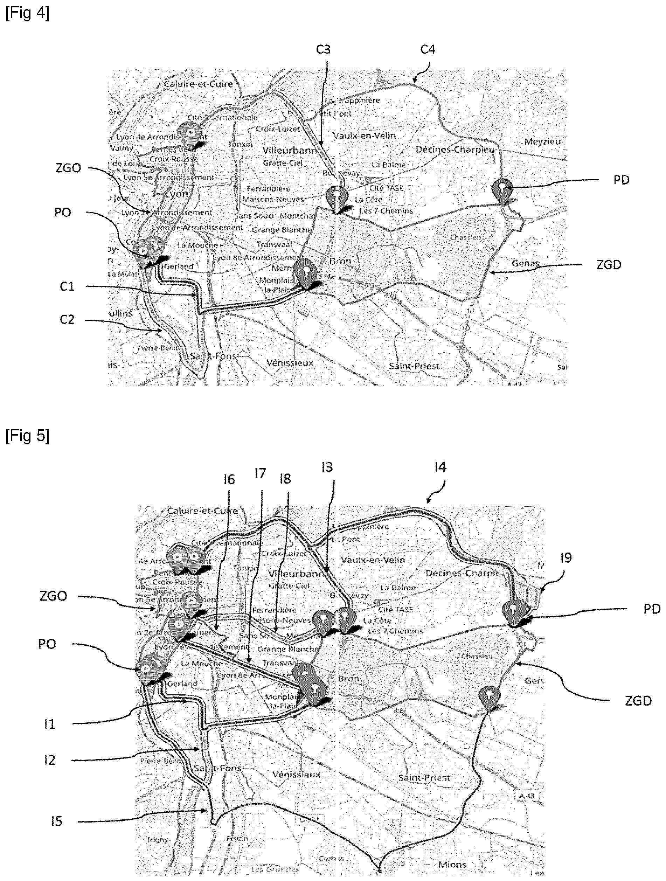

La figure 4 illustre, schématiquement et de manière non limitative, une carte de la métropole Lyonnaise avec les trajectoires représentatives de chacun des 4 clusters conservés. A l'ouest de la carte se trouve la zone géographique d'origine ZGO, qui comporte plusieurs points d'origine PO. A l'est de la carte, se trouve la zone géographique de destination ZGD, qui comporte plusieurs points de destination PD. Les quatre trajectoires représentatives des clusters conservés sont notées C1, C2, C3 et C4. On remarque que deux trajectoires C1, C2 passent par le sud, alors que deux trajectoires C3, C4 passent par le nord.

Ensuite, on détermine une pluralité d'itinéraires au moyen de l'application HERE Maps. Pour la détermination de ces itinéraires, on considère des points d'origine et de destination qui correspondent aux points d'origine et de destination des trajectoires C1 à C4, ainsi que des points à la frontière des zones géographiques d'origine et de destination. On détermine des itinéraires pour chaque 30 minutes dans créneau horaire choisi. Par application de l'algorithme de Quick Bundles, on obtient 12 clusters (groupements).

La figure 5 illustre, schématiquement et de manière non limitative, la même carte que la figure 4 de la métropole Lyonnaise avec les trajectoires représentatives de certains clusters (seules 9 trajectoires sont illustrées pour une meilleure lisibilité de la figure). Ces trajectoires représentatives sont indiquées I1 à I9. On remarque que les trajectoires représentatives I1, I2, I5 passent par le sud, les trajectoires représentatives I3, I4, I9 passent par le nord, et les trajectoires représentatives I6, I7 et I8 passent au centre.

Par application de la méthode de conflation, on fusionne les trajectoires représentatives obtenues par les données de géolocalisation mesurées et par les itinéraires, et on détermine une pluralité de routes entre la zone géographique d'origine et la zone géographique de destination.

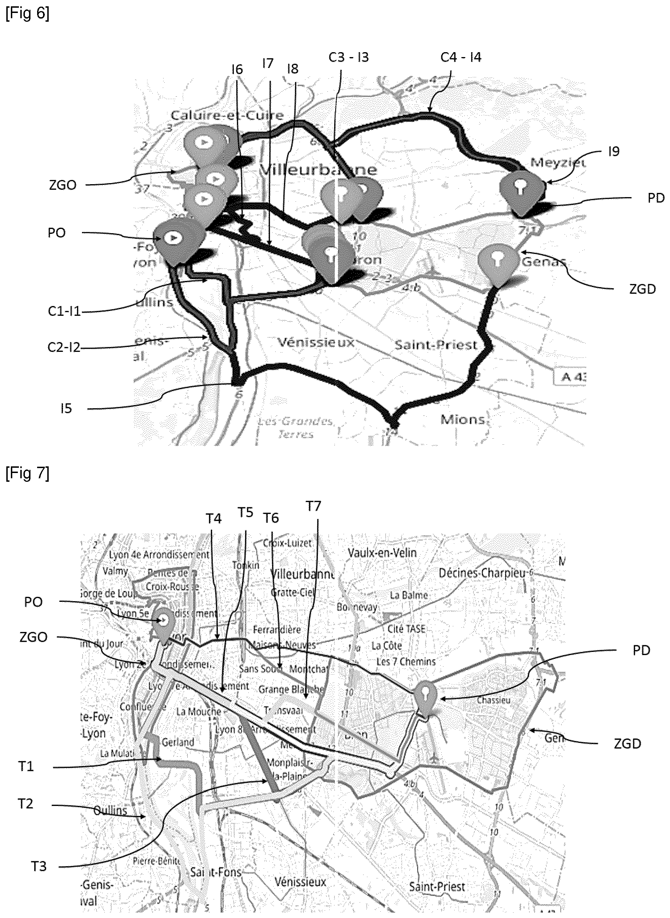

La figure 6 illustre, schématiquement et de manière non limitative, la même carte que les figures 4 et 5 avec les routes déterminées par le procédé selon l'invention. Sur cette carte, on retrouve les trajectoires représentatives C1 à C4 de la figure 4 et les trajectoires I1 à I9 de la figure 5. On observe que les trajectoires représentatives C1 à C4 sont appariés respectivement aux trajectoires représentatives I1 à I4, et que le procédé a permis d'identifier d'autres routes, notamment la routes I5 (la plus au sud), et les routes I6, I7, I8 (au centre).

Ainsi, le procédé selon l'invention permet d'identifier plus de routes que seulement avec les données de géolocalisation mesurées. De plus, grâce notamment à la méthode de conflation, on peut déterminer de manière précise des caractéristiques liées au déplacement sur ces routes, par exemple la vitesse, le trafic, etc.

A titre comparatif, l'application HERE propose de déterminer des routes entre deux zones géographiques, en déterminant le point d'origine de l'itinéraire comme le barycentre de la zone géographique d'origine, et le point de destination de l'itinéraire comme le barycentre de la zone géographique de destination.

Pour cet exemple de l'art antérieur, la figure 7 illustre, schématiquement et de manière non limitative, la même carte que les figures 4 à 6 avec les itinéraires déterminés par l'application HERE. Ces itinéraires sont indiqués T1 à T7. On remarque que les itinéraires sont différents des itinéraires obtenus par le procédé selon l'invention. De plus, ces itinéraires sont différents des trajets réalisés (figure 4). Par conséquent, ces itinéraires ne sont pas représentatifs des déplacements des utilisateurs.

Le procédé selon l'invention permet donc une meilleure représentativité que l'art antérieur.

**Revendications**

1. Procédé de détermination d'au moins une route (rte) entre une zone géographique d'origine (ZGO) et une zone géographique de destination (ZGD), **caractérisé en ce qu'**on met en œuvre les étapes suivantes :

   a. On acquiert des données de géolocalisation mesurées (MES) d'au moins deux trajets réalisés entre ladite zone géographique d'origine (ZGO) et ladite zone géographique de destination (ZGD) ;
   b. On regroupe (REG1) lesdites données de géolocalisation de trajets réalisés en une pluralité de groupements représentatifs de trajets au moyen d'une similarité entre lesdits trajets réalisés, ;
   c. Pour chaque groupement représentatif de trajets, on détermine une trajectoire représentative (TRA1) ;
   d. On détermine au moins deux itinéraires entre ladite zone géographique d'origine (ZGO) et ladite zone géographique de destination (ZGD) au moyen d'un système d'information géographique (SIG) ;
   e. On regroupe (REG2) lesdits itinéraires déterminés en une pluralité de groupements représentatifs d'itinéraires de trajets au moyen d'une similarité entre lesdits itinéraires déterminés;
   f. Pour chaque groupement représentatif d'itinéraires, on détermine une trajectoire représentative (TRA2) ; et
   g. On associe par fusion (FUS) lesdites trajectoires représentatives desdits trajets réalisés et lesdites trajectoires représentatives desdits itinéraires, et on en déduit au moins une route (rte) entre ladite zone géographique d'origine (ZGO) et ladite zone géographique de destination (ZGD) au moyen d'une méthode de conflation.

2. Procédé de détermination d'au moins une route selon la revendication 1, dans lequel on regroupe (REG1, REG2) lesdites données de géolocalisation de trajets réalisés et/ou lesdites données de géolocalisation d'itinéraires déterminés, au moyen d'un algorithme de regroupement de type faisceaux rapides « Quick Bundles ».

3. Procédé de détermination d'au moins une route selon l'une des revendications précédentes, dans lequel préalablement à l'étape de regroupement (REG1) desdites données de géolocalisation mesurées de trajets réalisés, on segmente (SEG1) lesdites données de géolocalisation mesurées de trajets réalises pour conserver des données de géolocalisation mesurées pertinentes pour des zones géographiques d'origine et de destination qui ne sont pas voisines.

4. Procédé de détermination d'au moins une route selon l'une des revendications précédentes, dans lequel pour déterminer au moins deux itinéraires entre ladite zone géographique d'origine (ZGO) et ladite zone géographique de destination (ZGD), on détermine une pluralité de points d'origine (PO) dans ladite zone géographique d'origine (ZGO) et une pluralité de points de destination (PD) dans ladite zone géographique de destination (ZGD) à partir des points d'origine (PO) et des points de destination (PD) des trajectoires représentatives desdits trajets réalisés.

5. Procédé de détermination d'au moins une route selon l'une des revendications précédentes, dans lequel préalablement à l'étape de regroupement d'itinéraires (REG2) déterminés, on segmente (SEG2) lesdites itinéraires déterminés pour conserver des portions d'itinéraires pertinentes pour des zones géographiques d'origine et de destination qui ne sont pas voisines.

6. Procédé de détermination d'au moins une route selon la revendication 3 ou selon la revendication 5, dans lequel on segmente (SEG1, SEG2) les données de géolocalisation mesurées de trajets réalises et/ou les itinéraires déterminés, pour conserver des données de géolocalisation mesurées pertinentes et/ou conserver des portions d'itinéraires pertinentes, par découpage desdites données de géolocalisation mesurées et/ou desdits itinéraires déterminés au sein de ladite zone géographique d'origine et/ou au sein de ladite zone géographique de destination

7. Procédé de détermination d'au moins une route selon l'une des revendications précédentes, dans lequel pour chaque trajectoire représentative et/ou pour chaque route, on détermine au moins une caractéristique choisie parmi la vitesse moyenne, la durée du trajet, la longueur du trajet, le trafic, le taux d'utilisation, et dans lequel l'association par fusion de l'étape g) s'applique également à ladite caractéristique.

8. Procédé de détermination d'au moins une route selon l'une des revendications précédentes, dans lequel les étapes sont mises en œuvre pour une période temporelle donnée.

9. Procédé de détermination d'au moins une route selon l'une des revendications précédentes, dans lequel les étapes sont mises en œuvre pour un mois, ou une semaine, ou un jour, ou un créneau horaire.

10. Procédé de détermination d'au moins une route selon l'une des revendications précédentes, dans lequel après l'étape de regroupement (REG1) desdites données de géolocalisation mesurées de trajets réalisés, on conserve uniquement les regroupements pour lesquels le nombre de trajets réalisés et/ou le nombre d'utilisateurs desdits trajets réalisés est supérieur ou égal à un seuil prédéterminé.

11. Procédé de détermination d'au moins une route selon l'une des revendications précédentes, dans lequel ladite similarité desdites données de géolocalisation de trajets réalisés et/ou ladite similarité desdits itinéraires est/sont déterminée(s) au moyen d'une distance de Fréchet.

12. Procédé de détermination d'une quantité d'au moins un polluant chimique et/ou sonore émis par au moins un véhicule lors d'un déplacement au sein d'un réseau routier entre une zone géographique d'origine et une zone géographique de destination, **caractérisé en ce qu'**on met en œuvre les étapes suivantes :

    a. On détermine au moins une route (rte) entre ladite zone géographique d'origine et ladite zone géographique de destination au moyen du procédé de détermination d'au moins une route selon l'une des revendications précédentes, et on en déduit une caractéristique de la vitesse de l'au moins un véhicule pour ladite au moins une route ; et
    b. On applique un modèle microscopique d'émissions polluantes chimiques et/ou sonore à ladite au moins une route pour déterminer une quantité d'au moins un polluant chimique et/ou sonore, ledit modèle microscopique reliant la vitesse du véhicule et la quantité d'au moins un polluant chimique et/ou sonore émis par ledit au moins un véhicule.

13. Procédé de détermination de la consommation d'énergie d'au moins un véhicule au sein d'un réseau routier lors d'un déplacement entre la zone géographique d'origine et la zone géographique de destination, **caractérisé en ce qu'**on met en œuvre les étapes suivantes :

    a) on détermine au moins une route entre la zone géographique d'origine et la zone géographique de destination au moyen du procédé de détermination d'au moins une route selon l'une des revendications 1 à 11, et on en déduit une caractéristique de la vitesse du véhicule pour la route ; et
    b') on applique un modèle microscopique de consommation énergétique à la caractéristique de vitesse du véhicule pour la route pour prédire une consommation d'énergie sur la route considérée, le modèle de consommation énergétique étant un modèle qui relie la vitesse du véhicule à une consommation énergétique du véhicule.

**Patentansprüche**

1. Verfahren zur Bestimmung mindestens einer Route (rte) zwischen einem geografischen Startbereich (ZGO) und einem geografischen Zielbereich (ZGD), **dadurch gekennzeichnet, dass** die folgenden Schritte umgesetzt werden:

    a. Erfassen von gemessenen Geolokalisierungsdaten (MES) von mindestens zwei Fahrten, die zwischen dem geografischen Startbereich (ZGO) und dem geografischen Zielbereich (ZGD) zurückgelegt werden;
    b. Gruppieren (REG1) der Geolokalisierungsdaten zurückgelegter Fahrten in eine Vielzahl von für Fahrten repräsentative Gruppierungen mittels einer Ähnlichkeit zwischen den zurückgelegten Fahrten;
    c. für jede für Fahrten repräsentative Gruppierung, Bestimmen eines repräsentativen Wegs (TRA1);
    d. Bestimmen von mindestens zwei Strecken zwischen dem geografischen Startbereich (ZGO) und dem geografischen Zielbereich (ZGD) mittels eines geografischen Informationssystems (SIG);
    e. Gruppieren (REG2) der bestimmten Strecken in eine Vielzahl von für Fahrtstrecken repräsentative Gruppierungen mittels einer Ähnlichkeit zwischen den bestimmten Strecken;
    f. für jede für Strecken repräsentative Gruppierung, Bestimmen eines repräsentativen Wegs (TRA2); und
    g. Zusammenführen (FUS) der für die zurückgelegten Fahrten repräsentativen Wege und der für die Strecken repräsentativen Wege und daraus Ableiten mindestens einer Route (rte) zwischen dem geografischen Startbereich (ZGO) und dem geografischen Zielbereich (ZGD) mittels eines Verschmelzungsverfahrens.

2. Verfahren zur Bestimmung mindestens einer Route nach Anspruch 1, wobei die Geolokalisierungsdaten zurückgelegter Fahrten und/oder die Geolokalisierungsdaten bestimmter Strecken mittels eines Gruppierungsalgorithmus vom Typ "Quick Bundles" gruppiert werden (REG1, REG2).

3. Verfahren zur Bestimmung mindestens einer Route nach einem der vorhergehenden Ansprüche, wobei vor dem Schritt des Gruppierens (REG1) der gemessenen Geolokalisierungsdaten zurückgelegter Fahrten die gemessenen Geolokalisierungsdaten zurückgelegter Fahrten segmentiert werden (SEG1), um gemessene Geolokalisierungsdaten zurückzubehalten, die für geografische Start- und Zielbereiche relevant sind, die nicht benachbart sind.

4. Verfahren zur Bestimmung mindestens einer Route nach einem der vorhergehenden Ansprüche, wobei zur Bestimmung von mindestens zwei Strecken zwischen dem geografischen Startbereich (ZGO) und dem geografischen Zielbereich (ZGD) eine Vielzahl von Startpunkten (PO) in dem geografischen Startbereich (ZGO) und eine Vielzahl von Zielpunkten (PD) in dem geografischen Zielbereich (ZGD) anhand der Startpunkte (PO) und der Zielpunkte (PD) der für die zurückgelegten Fahrten repräsentativen Wege bestimmt werden.

5. Verfahren zur Bestimmung mindestens einer Route nach einem der vorhergehenden Ansprüche, wobei vor dem Schritt des Gruppierens (REG2) bestimmter Strecken die bestimmten Strecken segmentiert werden (SEG2), um Streckenabschnitte zurückzubehalten, die für geografische Start- und Zielbereiche relevant sind, die nicht benachbart sind.

6. Verfahren zur Bestimmung mindestens einer Route nach Anspruch 3 oder nach Anspruch 5, wobei die gemessenen Geolokalisierungsdaten zurückgelegter Fahrten und/oder die bestimmten Strecken segmentiert werden (SEG1, SEG2), um relevante gemessene Geolokalisierungsdaten zurückzubehalten und/oder relevante Streckenabschnitte zurückzubehalten, indem die gemessenen Geolokalisierungsdaten und/oder die bestimmten Strecken innerhalb des geografischen Startbereichs und/oder innerhalb des geografischen Zielbereichs zerlegt werden.

7. Verfahren zur Bestimmung mindestens einer Route nach einem der vorhergehenden Ansprüche, wobei für jeden repräsentativen Weg und/oder für jede Route mindestens eine Eigenschaft bestimmt wird, die aus der mittleren Geschwindigkeit, der Dauer der Fahrt, der Länge der Fahrt, dem Verkehr, dem Nutzungsgrad ausgewählt wird, und wobei das Zusammenführen des Schritts g) auch auf die Eigenschaft angewendet wird.

8. Verfahren zur Bestimmung mindestens einer Route nach einem der vorhergehenden Ansprüche, wobei die Schritte für eine gegebene Zeitperiode umgesetzt werden.

9. Verfahren zur Bestimmung mindestens einer Route nach einem der vorhergehenden Ansprüche, wobei die Schritte für einen Monat oder eine Woche oder einen Tag oder ein Zeitfenster umgesetzt werden.

10. Verfahren zur Bestimmung mindestens einer Route nach einem der vorhergehenden Ansprüche, wobei nach dem Schritt des Gruppierens (REG1) der gemessenen Geolokalisierungsdaten zurückgelegter Fahrten nur die Gruppierungen zurückbehalten werden, bei denen die Anzahl zurückgelegter Fahrten und/oder die Anzahl von Nutzern der zurückgelegten Fahrten größer als oder gleich einer vorbestimmten Schwelle ist.

11. Verfahren zur Bestimmung mindestens einer Route nach einem der vorhergehenden Ansprüche, wobei die Ähnlichkeit der Geolokalisierungsdaten zurückgelegter Fahrten und/oder die Ähnlichkeit der Strecken mittels einer Fréchet-Distanz bestimmt wird/werden.

12. Verfahren zur Bestimmung einer Menge mindestens eines chemischen Schadstoffs und/oder von Lärm, die durch mindestens ein Fahrzeug während einer Fortbewegung innerhalb eines Straßennetzes zwischen einem geografischen Startbereich und einem geografischen Zielbereich emittiert wird, **dadurch gekennzeichnet, dass** die folgenden Schritte umgesetzt werden:

   a. Bestimmen mindestens einer Route (rte) zwischen dem geografischen Startbereich und dem geografischen Zielbereich mittels des Verfahrens zur Bestimmung mindestens einer Route nach einem der vorhergehenden Ansprüche und daraus Ableiten einer Eigenschaft der Geschwindigkeit des mindestens einen Fahrzeugs für die mindestens eine Route; und
   b. Anwenden eines mikroskopischen Modells für Emissionen chemischer Schadstoffe und/oder von Lärm auf die mindestens eine Route, um eine Menge mindestens eines chemischen Schadstoffs und/oder von Lärm zu bestimmen, wobei das mikroskopische Modell die Geschwindigkeit des Fahrzeugs und die von dem mindestens einen Fahrzeug emittierte Menge mindestens eines chemischen Schadstoffs und/oder von Lärm in Beziehung setzt.

13. Verfahren zur Bestimmung des Energieverbrauchs mindestens eines Fahrzeugs innerhalb eines Straßennetzes während einer Fortbewegung zwischen dem geografischen Startbereich und dem geografischen Zielbereich, **dadurch gekennzeichnet, dass** die folgenden Schritte umgesetzt werden:

   a) Bestimmen mindestens einer Route zwischen dem geografischen Startbereich und dem geografischen Zielbereich mittels des Verfahrens zur Bestimmung mindestens einer Route nach einem der Ansprüche 1 bis 11 und daraus Ableiten einer Eigenschaft der Geschwindigkeit des Fahrzeugs für die Route; und
   b') Anwenden eines mikroskopischen Energieverbrauchsmodells auf die Geschwindigkeitseigenschaft des Fahrzeugs für die Route, um einen Energieverbrauch auf der betrachteten Route vorherzusagen, wobei das Energieverbrauchsmodell ein Modell ist, das die Geschwindigkeit des Fahrzeugs mit einem Energieverbrauch des Fahrzeugs in Beziehung setzt.

**Claims**

1. Method for determining at least one course (rte) between a geographical area of origin (ZGO) and a geographical area of destination (ZGD), **characterized in that** the following steps are implemented:

   a. measured geolocation data (MES) of at least two journeys completed between said geographical area of origin (ZGO) and said geographical area of destination (ZGD) are acquired;
   b. said geolocation data of completed journeys are clustered (REG1) into a plurality of clusters representative of journeys by means of a similarity between said completed journeys;
   c. for each cluster representative of journeys, a representative path (TRA1) is determined;
   d. at least two routes between said geographical area of origin (ZGO) and said geographical area of destination (ZGD) are determined by means of a geographic information system (SIG);
   e. said determined routes are clustered (REG2) into a plurality of clusters representative of routes of journeys by means of a similarity between said determined routes;
   f. for each cluster representative of routes, a representative path (TRA2) is determined; and
   g. said paths representative of said completed journeys and said paths representative of said routes are combined by fusion (FUS), and at least one course (rte) between said geographical area of origin (ZGO) and said geographical area of destination (ZGD) is deduced therefrom by means of a conflation method.

2. Method for determining at least one course according to Claim 1, wherein said geolocation data on completed journeys and/or said geolocation data on determined routes are clustered (REG1, REG2) by means of a QuickBundles clustering algorithm.

3. Method for determining at least one course according to either of the preceding claims, wherein, prior to the step of clustering (REG1) said measured geolocation data on completed journeys, said measured geolocation data on completed journeys are segmented (SEG1) so as to retain measured geolocation data relevant to geographical areas of origin and destination that are not neighbouring.

4. Method for determining at least one course according to any of the preceding claims, wherein to determine at least two routes between said geographical area of origin (ZGO) and said geographical area of destination (ZGD), a plurality of points of origin (PO) in said geographical area of origin (ZGO) and a plurality of points of destination (PD) in said geographical area of destination (ZGD) are determined from the points of origin (PO) and points of destination (PD) of the paths representative of said completed journeys.

5. Method for determining at least one course according to any of the preceding claims, wherein, prior to the step of clustering (REG2) determined routes, said determined routes are segmented (SEG2) so as to retain route segments relevant to geographical areas of origin and destination that are not neighbouring.

6. Method for determining at least one course according to Claim 3 or according to Claim 5, wherein the measured geolocation data on completed journeys and/or the determined routes are segmented (SEG1, SEG2) so as to retain relevant measured geolocation data and/or to retain relevant route segments, by breaking down said measured geolocation data and/or said determined routes within said geographical area of origin and/or within said geographical area of destination.

7. Method for determining at least one course according to any of the preceding claims, wherein at least one characteristic selected from average speed, journey time, journey length, traffic, and usage level, is determined for each representative journey and/or for each course, and wherein the association by fusion of step g) is also applied to said characteristic.

8. Method for determining at least one course according to any of the preceding claims, wherein the steps are implemented for a given time period.

9. Method for determining at least one course according to any of the preceding claims, wherein the steps are implemented for a month, or a week, or a day, or a time slot.

10. Method for determining at least one course according to any of the preceding claims, wherein after the step of clustering (REG1) said measured geolocation data on completed journeys, only clusters for which the number of completed journeys and/or the number of users of said completed journeys is greater than or equal to a predetermined threshold are kept.

11. Method for determining at least one course according to any of the preceding claims, wherein said similarity of said geolocation data on completed journeys and/or said similarity of said routes is/are determined by means of a Fréchet distance.

12. Method for determining an amount of at least one chemical pollutant and/or type of noise pollution generated by at least one vehicle during a trip within a road network between a geographical area of origin and a geographical area of destination, **characterized in that** the following steps are implemented:

   a. at least one course (rte) between said geographical area of origin and said geographical area of destination is determined by means of the method for determining at least one course according to any of the preceding claims, and a characteristic of the speed of the at least one vehicle for said at least one course is deduced therefrom; and
   b. a microscopic model of generation of chemical pollutants and/or types of noise pollution is applied to said at least one course so as to determine an amount of at least one chemical pollutant and/or type of noise pollution, said microscopic model relating the speed of the vehicle and the amount of at least one chemical pollutant and/or type of noise pollution generated by said at least one vehicle.

13. Method for determining the energy consumption of at least one vehicle within a road network when during a trip between the geographical area of origin and the geographical area of destination, **characterized in that** the following steps are implemented:

   a) at least one course between the geographical area of origin and the geographical area of destination is determined by means of the method for determining at least one course according to any of Claims 1 to 11, and a characteristic of the speed of the vehicle for the course is deduced therefrom; and
   b') a microscopic model of energy consumption at the speed characteristic of the vehicle for the course is applied to predict an energy consumption over the course in question, the model of energy consumption being a model that relates the speed of the vehicle to an energy consumption of the vehicle.

[Fig 1]

[Fig 2]

[Fig 3]

[Fig 4]

[Fig 5]

[Fig 6]

[Fig 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013191314 A
- US 20060242108 A
- FR 3049653
- WO 2017174239 A

**Littérature non-brevet citée dans la description**

- **BERGMAN CECILIA et al.** Conflation of OpenStreetMap and Mobile Sports Tracking Data for Automatic Bicycle Routing. *TRANSACTIONS IN GIS*, 10 March 2016, vol. 20 (6), 848-868
- **E. GARYFALLIDIS** ; **M. BRETT** ; **M. CORREIA** ; **G. WILLIAMS** ; **I. NIMMO-SMITH**. QuickBundles, a Method for Tractography Simplification. *Frontiers in neuroscience*, 2012, vol. 6 (175)
- **E. GARYFALLIDIS** ; **M.-A. CÔTÉ** ; **F. RHEAULT** ; **M. DESCOTEAUX**. QuickBundlesX: Sequential clustering of millions of streamlines in multiple levels of detail at record execution time. *24th international Society of Magnetic Resonance in Medicine (ISMRM)*, 2016
- **T.P. HILL** ; **J. MILLER**. How to combine independent data sets for the same quantity. *Chaos: An Interdisciplinary Journal of Nonlinear Science*, 2011, vol. 21 (3), 033102